# EUROPEAN PATENT SPECIFICATION

(11) **EP 0 547 009 B1**
(45) Date of publication and mention of the grant of the patent: **29.05.1996**
(21) Application number: 92830654.7
(22) Date of filing: 04.12.1992
(51) Int. Cl.: B62D 5/22, B62D 5/12

(54) **Hydraulic actuator, in particular for activating servocontrols and the like mechanisms**
Hydraulikzylinder, insbesondere zum Durchführen einer Hilfskraftsteuerung und ähnlicher Mechanismen
Vérin hydraulique, notamment pour la mise en oeuvre des servo-commandes et mécanismes similaires

(30) Priority: 12.12.1991 IT MI913339
(43) Date of publication of application: 16.06.1993
(73) Proprietor: Baggioli, Giuseppe, I-22053 Lecco (Como) (IT)
(72) Inventor: Baggioli, Giuseppe, I-22053 Lecco (Como) (IT)
(74) Representative: Righetti, Giuseppe

(56) References cited:
- EP-A- 0 340 896
- WO-A-90/05083
- DE-A- 2 538 778
- DE-C- 4 019 693
- US-A- 3 069 209

## Description

The present invention relates to a hydraulic actuator, in particular for activating servocontrols and the like mechanisms, comprising: a cylindrical tubular body; a pair of closing elements, each of which is hermetically engaged to one end of the cylindrical tubular body; a piston slidably and sealingly engaged in the cylindrical tubular body and carrying at least one drive rod slidably and sealingly passing through at least one of said closing elements, said piston defining a first pressurization chamber and a second pressurization chamber within the cylindrical tubular body; at least first and second hydraslic coupling elements operatively engaged with the cylindrical tubular body and respectively opening into the first and second pressurization chambers; a plurality of attachment tailpieces rigidly connected to the cylindrical tubular body for enabling engagement of the actuator with a bearing structure. Such a hydraulic actuator is known for example from EP-A-0340896.

In the embodiment described, the actuator is especially conceived for power steerings of motor-vehicles and the like. Therefore, in the progress of the present description reference will be particularly made to this technological field, without however intending to limit the possibilities of use of the invention in other fields.

It is known that in servocontrolled steering gears for motor-vehicles and the like a hydraulic actuator is provided to be associated with the traditional steering gear case, for example of the rack-and-pinion type, which actuator is designed to act on the rack or an equivalent steering member in order to assist the steering action carried out by the motor-vehicle's driver.

This hydraulic actuator comprises a cylindrical tubular body to the opposite ends of which respective closing elements are hermetically engaged, one of which elements is normally formed of one piece construction with the body of the steering gear case. Slidably and sealingly housed in the cylindrical tubular body is a piston integrally carried by a drive rod completely passing through the tubular body itself, emerging therefrom through the closing elements and integrally connected to the rack at one of the ends thereof.

Within the cylindrical tubular body, the piston defines a first and a-second pressurization chambers into which, through the tubular body itself, respective hydraulic coupling elements open, which hydraulic coupling elements are connected to a selection valve to be activated at the moment that a steering occurs. In greater detail, the selection valve will selectively cause the delivery of working fluid under pressure into the first or the second pressurization chamber, depending on the direction of the steering movement, so that through the piston and drive rod, longitudinal forces are transmitted to the rack that will facilitate the driver's manoeuvring.

The foregoing being stated, it will be noted that in making power steerings, also due to the high feed pressures of the working fluid the value of which often reaches and exceeds 70 bars, a certain difficulty has always been encountered in providing cylindrical tubular bodies having reasonably reduced costs and at the same time capable of meeting the present requirements as regards reliability and functional character.

In the past cylindrical tubular bodies made of hardened steel were employed which were obtained through cold-forming processes.

These cylindrical bodies, while being reliable from the point of view of tightness, involved some problems due to the necessity of manufacturing several additional elements separately and subsequently engaging them to the tubular body, which elements were for example necessary for enabling the fluid-operated actuator and/or the steering gear case to be fastened to the motor vehicle's bearing structure. In addition, steel used for mating these tubular bodies was not appropriate to the ends of an efficient elimination of heat generated in the working fluid under high pressure. Therefore, above all in case of heavy and long-time use, problems could arise, due for example to damaging and wear of the sealing members associated with the piston and/or the closing elements, taking into account the high temperature to which they were submitted.

In order to obviate the above problems, the solution described hereinbefore has been abandoned since several years and said actuators have been replaced by actuators the cylindrical body of which is made of an aluminium alloy or another similar material, pressure die-cast and/or chill-cast.

Pressure die-casting enables all necessary tailpieces to be formed of one piece construction with the cylindrical body, in order to enable the actuator to be for example fastened to the motor-vehicle structure and/or the hydraulic coupling elements to be suitably and readily engaged. In addition, aluminium alloys anti the like used in this solution enable heat to be easily eliminated, to advantage of a greater operating reliability of the actuator.

However, at the present state of the art, making the cylindrical bodies by pressure die-casting and/or chill-casting also has some drawbacks.

In fact it is necessary to carry out long and expensive final finish workings on the product, due to the great machine allowances involved in the die-casting process. From this point of view it is particularly important that the inner surfaces of the tubular body should be bored over the whole length thereof, with the machining allowances being removed to a great extent. Subsequently, a further finish operation on the inner surfaces of the tubular body is required.

In addition, often products obtained from die-casting are likely to exhibit structure defects of different typologies such as for example blowholes due to gas lock, cracks and shrinkage cavities, and so on. In confirmation of the above it is noted that different classifications have been made relating to the imperfection degree that can be found in die-cast products.

Since reliability is of the greatest importance to the ends of safety in actuators for motor-vehicle power steerings, it is necessary that the quality of said die-castings should fall within the highest ones of said classifications. Therefore rather sophisticated and expensive die-casting techniques must be adopted in order to achieve a sufficiently high qualitative standard of the obtained die-castings.

In addition, the produced pieces must be submitted, one by one, to severe inspections for ascertaining their perfect hermetic tightness. Pieces that do not overcome the tightness test are recovered by means of an impregnation process aiming at closing the porosities present in the material. In greater detail, for carrying out the impregnation process the faulty piece, previously degreased and dried, needs to be introduced into a vessel inside which the vacuum is created to 99%. The workpiece must be held under vacuum for an important period of time, in the order of 20 minutes.

Subsequently a suitable compound containing resins and/or metal parts in a colloidal state is introduced into the vessel. Under this situation, the colloidal compound impregnates the workpiece filling the porosities thereof. Subsequently, the workpiece must be submitted to a washing and drying step so that the colloidal compound may dry within the porosities.

Pieces submitted to the impregnation process must be again submitted to the tightness test and discarded if they do not give successful results in this second test too.

From the foregoing it is apparent that carrying out said impregnation processes gives rise to an important increase in the production cost of said actuators.

The main object of the present invention is to eliminate the above mentioned problems present in the known art.

In particular, the invention aims at making fluid-operated actuators that, while keeping the advantages proper to the products made by die-casting an aluminium alloy or similar material, are capable of offering a complete and sure hermetic tightness, so that the above described impregnation processes do not need to be carried out any longer.

Another object of the invention is to remarkably facilitate the boring and finishing operations on the inner surface of the cylindrical tubular body after die-casting.

The foregoing and further objects that will become more apparent in the course of the present description are substantially achieved by a hydraulic actuator, in particular for activating servocontrols and the like mechanisms, characterized in that said cylindrical tubular body comprises: a tubular core in the form of an extruded section, having the respective ends hermetically engaged by said closing elements and carrying connection seatings for sealingly engaging said first and second hydraulic coupling elements; a skirt die-cast around said tubular core, carrying said attachment tailpieces and exhibiting access openings each defined at one of said connection seatings for enabling said connection seatings to be engaged by the hydraulic coupling elements; anchoring means formed on said tubular core and substantially defining undercuts designed to be filled with the die-cast material forming the skirt, in order to ensure the integral anchoring of said skirt to the tubular core.

Further features and advantages will be best understood from the detailed description of a preferred embodiment of a hydraulic actuator, in particular for activating servocontrols and the like mechanisms, in accordance with the present invention, which description is given hereinafter by way of non-limiting example with reference to the accompanying drawings, in which:
- Fig. 1. is a partly cut away, perspective view of a hydraulic actuator associated with a motor vehicle steering gear;
- Fig. 2 is a crows-sectional view of the actuator of the invention, taken along line II-II in Fig. 3;
- Fig. 3 is an interrupted diametrical sectional view taken along the line III-III in Fig. 2, at one of the ends of the cylindrical tubular body of the actuator.

Referring to the drawings, a hydraulic actuator in particular for activating servocontrols and the like mechanisms in accordance with the present invention has been generally identified by reference numeral 1.

In the embodiment shown the actuator 1 is interlocked to a steering gear 2 for motor-vehicles conventionally comprising a so-called steering gear case 3 within which a rack 4 is slidably guided, which rack is longitudinally movable upon command of a pinion 5 keyed onto the end of a shaft 6 driven in rotation by a flywheel, not shown.

The hydraulic actuator 1 comprises a cylindrical tubular body 7 externally provided with attachment tailpieces 7a suitably distributed and shaped so as to enable fastening of the actuator 7 and the steering gear case 3 to the motor-vehicle structure.

Hermetically engaged to the opposite-ends of the tubular body 7, upon interposition of sealing rings 8a, are respective closing elements 8. In the accompanying figures only one of said closing elements is shown. In known manner, the closing element not shown is joined to the corresponding end of the steering gear case 3 in a unitary manner, but at all events this closing element is not of importance to the ends of the present invention.

Slidably and sealingly housed within the cylindrical tubular body 7 is at least one piston 9, integrally carried by a corresponding drive rod 10. The drive rod 10 has a longitudinal extension greater than that of the cylindrical tubular body 7 and passes through the closing elements 8 in a slidable and sealing manner.

In greater detail, the presence of the piston 9 divides the longitudinal extension of the drive rod 10 into a first portion 10a and a second portion 10b.

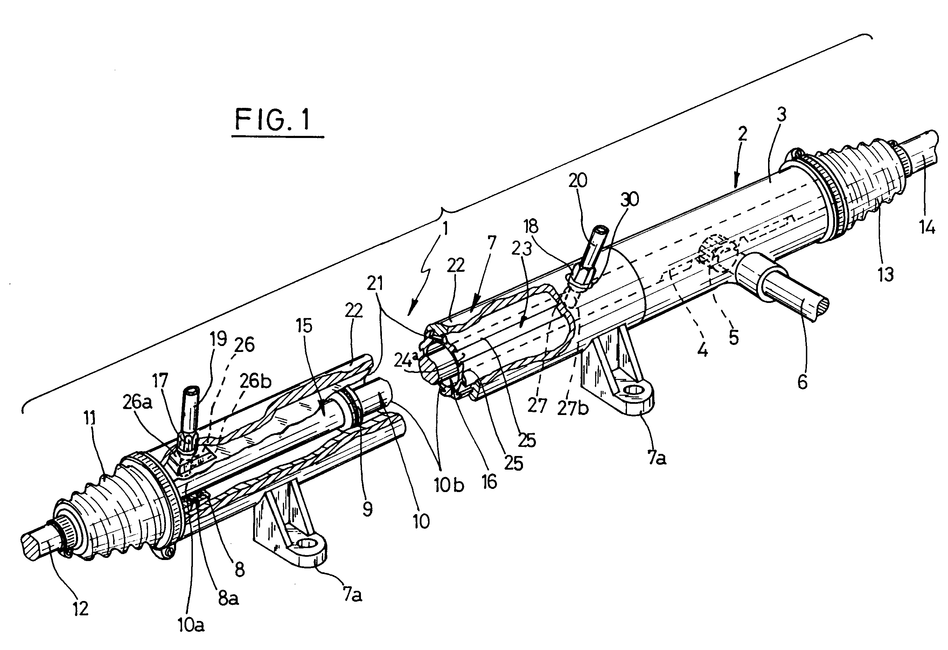

The first portion 10a, located to the left with reference to Fig. 1, is connected to a first arm 12 by a ball joint housed in a first protection bellows 11 fastened to one end of the cylindrical tubular body 7. The arm 12 is designed to transmit the steering movements to a first motor-vehicle wheel.

The second portion 10b integrally carries said rack 4 and extends beyond the steering gear case 3 for connection to a second arm 14 by another ball joint housed in a second protection bellows 13. The second arm 14 is designed to transmit the steering movements to a second motor-vehicle wheel. The ball joints connecting the arms 12, 14 to the wheels have not been shown as known per se and conventional, and at all events they are not of importance to the ends of the invention.

Within the cylindrical tubular body 7 the piston 9 defines a first and a second pressurization chambers 15, 16 into which respective hydraulic coupling elements 17, 18, open. Said coupling elements are operatively and sealingly engaged through the tubular body itself and are connected to respective delivery pipes 19, 20 being part of a conventional hydraulic feed circuit.

In a manner known per se, this circuit, not shown in detail as not of importance to the ends of the invention, comprises a fluid pump designed to send high-pressure working fluid, usually oil; to a selection valve.

The selection valve is, for example, operatively connected to the rack 4 and/or the pinion 5 so that it can detect the steering movements transmitted by the driver to the pinion and the rack and consequently selectively send fluid under pressure to the first or second pressurization chambers 15, 16, depending on the direction according to which the detected steering movement takes place. In greater detail, said valve will send working fluid under pressure to the first pressurization chamber 15, that is to say the chamber disposed to the left of piston 9 in Fig. 1, when the steering movement demands an axial displacement of the rack 4 to the right. Therefore the rack 4 in its movement is assisted by the thrust exerted on the piston 9 by effect of the pressure of the fluid sent to the first pressurization chamber 15.

Likewise, fluid under pressure will be sent to the second pressurization chamber 16 when the steering movement demands an axial displacement of the rack 4 to the left.

In an original manner, in accordance with the present invention, the cylindrical tubular body 7 comprises a tubular core 21 in the form of an extruded section, externally coated with a skirt 22 preferably made of an aluminium alloy material or another light alloy material, die-cast around the core and carrying said attachment tailpieces 7a in a unitary manner.

The tubular core 21 is preferably formed from an extruded section made of a light alloy, preferably an aluminium alloy, but it can also be made of other materials or alloys.

The tubular core 21 exhibits a suitably-ground inner cylindrical surface 21a along which said piston 9 sealingly slides. At the opposite ends of the tubular core 21 and exactly at the inner cylindrical surface 21a thereof, the closing elements 8 and the cylindrical tubular body 7 are hermetically sealed by sealing rings 8a.

The tubular core 21 is externally provided with anchoring means 23 defining respective undercuts 24 that, during die-casting of the skirt 22, lend themselves to be filled with the material forming the skirt itself so that they can ensure the integral anchoring of said skirt to the core 21.

In the embodiment shown the anchoring means 23 comprises a plurality of longitudinal ribs 25 extending parallelly along the tubular core 21, disposed and shaped in such a manner that the undercuts 24 are substantially constituted by dovetail grooves 24a homogeneously distributed on the outer circumferential extension of the tubular core 21.

Connection seatings 26, 27 are also advantageously provided on the tubular core 21, which seatings are designed to sealingly engage said first and second hydraulic coupling elements 17, 18. In the embodiment shown, the connection seatings 26, 27 are defined by flarings of truncated conical form formed on radial through holes 26b, 27b extending through respective blocks 26a (only one of which is shown) projecting from the tubular core 21.

The blocks 26a can be obtained for example as a result of a milling operation carried out, before die-casting of the skirt 22, on an auxiliary rib 28 (shown in dotted line) extending, in an original manner, over the entire longitudinal extension of the section forming the tubular core 21.

Obviously, the auxiliary rib 28 may also be maintained untouched and incorporated in the skirt 22, following die-casting of said skirt around the tubular core 21.

Access of the hydraulic coupling elements 17, 18 to the respective connection seatings 26, 27 takes place through respective access openings 29, 30 formed in the skirt 22, at the connection seatings themselves.

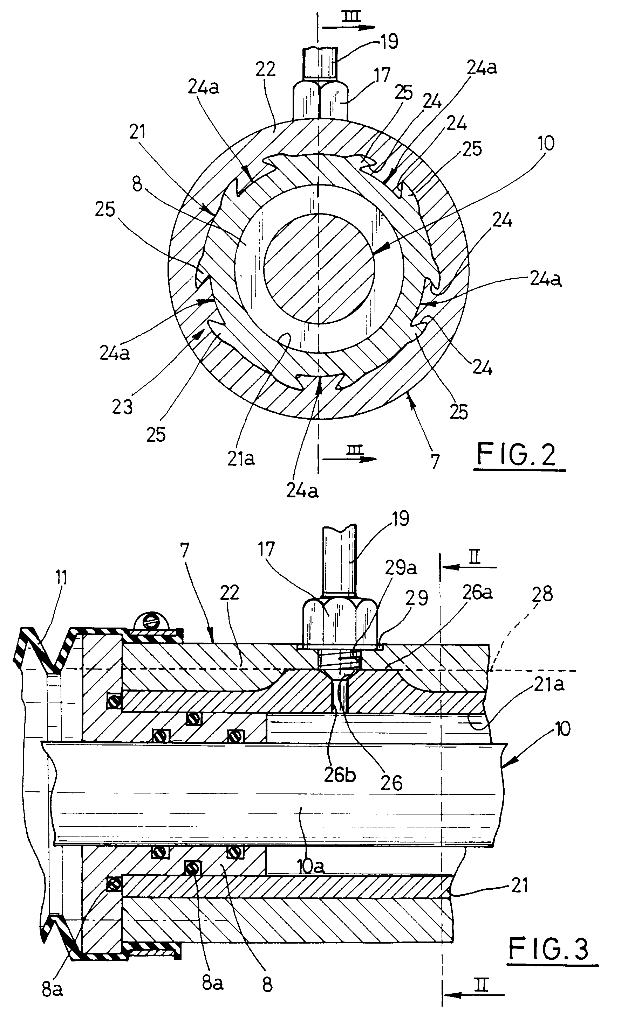

In the embodiment shown, the thickness of the skirt 22 is greater than the height of the blocks 26a with respect to the outer surface of the core 21. As clearly viewed from Fig. 3, at the connection seatings 26, 27, threaded seatings 29a are preferably formed (only one of which is shown) into which the hydraulic coupling elements 17,18 are operatively engaged by screwing.

Alternatively, the thickness of the skirt 22 may be provided to be lower than the height of the blocks 26a so that said blocks are directly exposed externally of the actuator 1 through the respective access openings 29, 30 defined in the skirt 22. In this case, the threaded seatings 29a will be directly formed in the blocks 26a.

The invention attains the intended purposes.

In fact. the tubular core 21 made in the form of an extruded section, ensures a perfect tightness against the working fluid under pressure, by virtue of the complete absence of structural defects, such as blowholes and shrinkage cavities, which are typical of die-castings.

In addition to the guarantees of hydraulic tightness which are implicit in the extruded section forming the tubular core 21, the perfect hydraulic tightness of the actuator 1 under working conditions is also ensured by the fact that the hermetic sealings at the hydraulic coupling elements 17, 18 and the closing elements 8 take place directly on the tubular core 21. In other words, the die-cast skirt 22 is completely isolated from the working fluid under pressure, so that the presence therein of blowholes or shrinkage cavities typical of die-castings, does not affect the good operation and reliability of the actuator in question.

Furthermore, since the tubular core is formed with an extruded section, it is no longer necessary to remove important amounts of machining allowances during the finish operations executed on the inner surface of the cylindrical tubular body, which on the contrary happens in the known art. The finish operations are further facilitated, as compared to die-castings of the known art, by the best workability of the extruded member forming the tubular core 21, due to its greater structural compactness.

The structural compactness of the extruder section also brings about improved mechanical characteristics that, as compared to conventional die-castings, better meet the operating requirements of the piston 9-cylindrical tubular body 7 assembly.

In conclusion, in spite of costs resulting from the manufacture of the tubular core 21 and the necessary manipulations for arranging said tubular core within the machines for die-casting the outer skirt 22 thereon, the invention enables more reliable hydraulic actuators to be produced at greatly reduced costs as compared to those of the known art, since all the long and expensive impregnation processes for recovery of the faulty pieces are eliminated, as well as most of the mechanical finish workings on the workpieces.

It is understood that the invention includes all changes and modifications which do not constitute a departure from the true scope of this invention, as claimed in the following claims.

## Claims

1. A hydraulic actuator, in particular for activating servocontrols and the like mechanisms, comprising:
- a cylindrical tubular body (7);
- a pair of closing elements (8), each of which is hermetically engaged to one end of the cylindrical tubular body (7);
- a piston (9) slidably and sealingly engaged in the cylindrical tubular body (7) and carrying at least one drive rod (10) slidably and sealingly passing through at least one of said closing elements (8), said piston (9) defining a first pressurization chamber (15) and a second pressurization chamber (16) within the cylindrical tubular body (7);
- at least first and second hydraulic coupling elements (17, 18) operatively engaged with the cylindrical tubular body (7) and respectively opening into the first and second pressurization chambers (15, 16);
- a plurality of attachment tailpieces (7a) rigidly connected to the cylindrical tubular body (7) for enabling engagement of the actuator (1) with a bearing structure,
characterized in that said cylindrical tubular body (7) comprises:
- a tubular core (21) in the form of an extruded section, having the respective ends hermetically engaged by said closing elements (8) and carrying connection seatings (26, 27) for sealingly engaging said first and second hydraulic coupling elements (17, 18);
- a skirt (22) die-cast around said tubular core (21), carrying said attachment tailpieces (7a) and exhibiting access openings (29, 30) each defined at one of said connection seatings (26, 27) for enabling said connection seatings to be engaged by the hydraulic coupling elements (17, 18);
- anchoring means (23) formed on said tubular core (21) and substantially defining undercuts (24) designed to be filled with the die-cast material forming the skirt (22), in order to ensure the integral anchoring of said skirt to the tubular core.

2. An actuator according to claim 1, characterized in that said anchoring means (23) comprises a plurality of longitudinal ribs (25) extending parallelly along the tubular core (21) to define said undercuts (24), which undercuts are substantially embodied by dovetail grooves (24a) homogeneously distributed on the outer circumferential extension of the tubular core (21).

3. An actuator according to claim 1, characterized in that said connection seatings (26, 27) are defined by flarings of truncated conical form exhibited by radial through holes (26b, 27b) formed through respective blocks (26a) radially projecting from said tubular core (21).

4. An actuator according to claim 3, characterized in that said blocks (26a) are formed by removing material from at least one auxiliary rib (28) longitudinally provided on the extruded section forming said tubular core (21).

5. An actuator according to claim 1, characterized in that said connection seatings (26, 27) are defined by flarings of truncated conical form exhibited by radial through holes (26b, 27b) formed through at least one auxiliary rib (28) extending along the tubular core (21).

6. An actuator according to claim 1, characterized in that said skirt (22) at each of said connection seatings (26, 27) exhibits respective threaded seatings (29a) designed to operatively engage the hydraulic coupling elements (17, 18) by screwing.

7. An actuator according to claim 1, characterized in that said tubular core (21) is formed from an extruded section made of an aluminium alloy material.

## Patentansprüche

1. Hydraulischen Arbeitszylinder, insbesondere zur Aktivierung von Servosteuerungen und ähnlichen, umfassend:
ein zylinderförmiges Rohrgehäuse (7);
ein Paar von Abschlußelementen (8), die jeweils an einem Ende des zylinderförmigen Rohrgehäuses (7) abgedichtet angreifen;
einen Kolben (9), der gleitbar und abgedichtet im zylinderförmigen Rohrgehäuse (7) geführt und mindestens mit einer Antriebsstange (10) versehen ist, die gleitbar und abgedichtet mindestens eines der Abschlußelemente (8) durchdringt, wobei der Kolben (9) einen ersten Druckraum (15) und einen zweiten Druckraum (16)innerhalb des zylinderförmigen Rohrgehäuses (7) selbst festlegt;
mindestens ein erstes und ein zweites hydraulisches Anschlußelement (17, 18), die mit dem zylinderförmigen Rohrgehäuse (7) wirksam in Eingriff stehen und jeweils in den ersten und in den zweiten Druckraum (15, 16) münden;
eine vielzahl von Angriffsansätzen (7a), die mit dem zylinderförmigen Rohrgehäuse (7) starr verbunden sind, um den Ansatz des Arbeitszylinders (1) mit einem Tragaufbau zu erlauben,
dadurch gekennzeichnet, daß das zylinderförmige Rohrgehäuse umfaßt (7):
einen Rohrkern (21) in der Form eines stranggepressten Profils, das die jeweiligen, von den Abschlußelementen (8) abgedichtet ergriffenen Enden aufweist und mit Verbindungsaufnahmen (26, 27) für den luftdichten Eingriffes des ersten und des zweiten hydraulischen Anschlußelementes(17, 18) versehen ist;
einen druckgegossenen Mantel um den Rohrkern (21) herum, der die Anschlußansatze (7a) trägt und Zugangsöffnungen (29, 30) aufweist, die jeweils im Bereich einer der Verbindungsaufnahmen (26, 27) festgelegt sind, um den Eingriff dieser letzteren mit dem hydraulischen Anschlußelementen (17, 18) zu erlauben; Verankerungsmittel (23), die am Rohrkern (21) ausgearbeitet sind und im wesentlichen Hinterschneidungen (24) festlegen, die dazu bereitgestellt sind, mit dem den Mantel (22) bildenden druckgegossenen Material gefüllt zu werden, um die feste Verankerung des Mantels am Rohrkern selbst sicherzustellen.

2. Arbeitszylinder nach Anspruch 1, dadurch gekennzeichnet, daß die Verankerungsmittel (23) eine Vielzahl von Längsstegen (25) umfassen, die sich parallel längs des Rohrkerns (21) erstrecken, um diese Hinterschneidungen (24) festzulegen, wobei diese letzteren im wesentlichen als schwalbenschwahzförmige Nuten (24a) ausgebildet sind, die gleichförmig auf der umlaufenden Außenabwicklung des Rohrkerns (21) verteilt sind.

3. Arbeitszylinder nach Anspruch 1, dadurch gekennzeichnet, daß die Verbindungsaufnahmen (26, 27) durch kegelstumpfförmige Aussenkungen festgelegt sind, die radiale durchgehende Bohrungen (26b, 27b) aufweisen, die durch jeweilige Blöckchen (26a) ausgearbeitet sind, die radial vom Rohrkern (21) vorspringen.

4. Arbeitszylinder nach Anspruch 3, dadurch gekennzeichnet, daß die Blöckchen (26a) durch Abhebung von Material von mindestens einem Hilfssteg (28) erhalten werden, der in Längsrichtung an dem den Rohrkern (21) bildenden Stranggußprofil ausgearbeitet wurde.

5. Arbeitszylinder nach Anspruch 1, dadurch gekennzeichnet, daß die Verbindungsaufnahmen (26, 27) durch kegelstumpfförmige Aussenkungen festgelegt sind, die radiale, durchgehende Bohrungen (26b, 27b) aufweisen, die durch mindestens einen Hilfssteg (28) ausgearbeitet sind, der sich längs des Rohrkerns (21) erstreckt.

6. Arbeitszylinder nach Anspruch 1, dadurch gekennzeichnet, daß der Mantel (22) im Bereich einer jeden Verbindungsaufnahme (26, 27) jeweilige Gewindeaufnahmen (29a) aufweist, die dazu bereitgestellt sind, durch Einschrauben mit dem hydraulischen Anschlußelementen (17, 18) wirksam in Eingriff zu kommen.

7. Arbeitszylinder nach Anspruch 1, dadurch gekennzeichnet, daß der Rohrkern (21) durch ein Stranggußprofil aus einer Aluminiumlegierung gebildet wird.

## Revendications

1. Vérin hydraulique, notamment pour la mise en oeuvre des servo-commandes et mécanismes similaires, comprenant:
- un corps tubulaire cylindrique (7);
- une paire d'éléments de fermeture (8), chacun desquels est en prise de manière étanche avec l'une des extrémités du corps tubulaire cylindrique (7);
- un piston (9) monté de manière coulissante et étanche dans le corps tubulaire cylindrique (7) et portant au moins une tige de commande (10) traversant de manière coulissante et étanche au moins un desdits éléments de fermeture (8), ledit piston (9) définissant une première chambre de pressurisation (15) et une deuxième chambre de pressurisation (16) dans le corps tubulaire cylindrique (7);
- au moins des premiers et deuxièmes éléments de raccordement hydraulique (17, 18) en prise de manière opérationnelle avec le corps tubulaire cylindrique (7) et débouchant respectivement dans la première et la deuxième chambres de pressurisation (15, 16);
- une pluralité de pattes de fixation (7a) reliées rigidement au corps tubulaire cylindrique (7) pour permettre d'attacher le vérin (1) à une structure porteuse,
caractérisé en ce que ledit corps tubulaire cylindrique (7) comporte:
- une âme tubulaire (21) en forme de profilé extrudé, présentant les respectives extrémités engagées hermétiquement par lesdits éléments de fermeture (8) et partant des sièges de liaison (26, 27) pour recevoir de manière étanche lesdits premier et deuxième éléments de raccordement hydraulique (17, 18);
- une jupe (22) moulée sous pression autour de ladite âme tubulaire (21), portant lesdites pattes de fixation (7a) et présentant des ouvertures d'accès (29, 30) définies chacune en correspondance de l'un desdits sièges de liaison (26, 27) pour permettre l'engagement entre lesdits sièges de liaison et les éléments de raccordement hydraulique (17, 18);
- des moyens d'ancrage (23) formés sur ladite âme tubulaire (21) et définissant essentiellement des contre-dépouilles (24) destinées à être remplies de la matière moulée sous pression formant la jupe (22), pour assurer un ancrage solidaire de ladite jupe à l'âme tubulaire.

2. Vérin selon la revendication 1, caractérisé en ce que lesdits moyens d'ancrage (23) comportent une pluralité de nervures longitudinales (25) s'étendant parallèlement le long de l'âme tubulaire (21) à définir lesdites contre-dépouilles (24), ces dernières étant essentiellement matérialisées par des rainures en queue-d'aronde (24a) distribuées de manière uniforme sur l'extension circonférentielle extérieure de l'âme tubulaire (21).

3. Vérin selon la revendication 1, caractérisé en ce que lesdits sièges de liaison (26, 27) sont définis par des évasements de forme tronconique présentés par des trous radiaux de passage (26b, 27b) formés à travers de respectifs blocs (26a) faisant radialement saille de ladite âme tubulaire (21).

4. Vérin selon la revendication 3, caractérisé en ce que lesdits blocs (26a) sont formés par enlévement de matière au moins d'une nervutre auxiliaire (28) prévue longitudinalement sur le profilé extrudé formant ladite âme tubulaire (21).

5. Vérin selon la revendication 1, caractérisé en ce que lesdits sièges de liaison (26, 27) sont définis par des évasement de forme tronconique présentés par des trous radiaux de passage (26b, 27b) formés à travers au moins une nervure auxiliaire (28) s'étendant le long de l'âme tubulaire (21).

6. Vérin selon la revendication 1, caractérisé en ce que ladite jupe (22) en correspondance de chacun desdits sièges de liaison (26, 27) présente de respectifs sièges taraudés (29a) destinés à engager de manière opérationelle, par visage, les éléments de raccordement hydraulique (17, 18).

7. Vérin selon la revendication 1, caractérisé en ce que ladite âme tubulaire (21) est formée à partir d'un profilé extrudé réalisé en alliage d'aluminium.
